Europäisches Patentamt

European Patent Office

Office européen des brevets

(19)

(11) Publication number: **0 107 700 B1**

# EUROPEAN PATENT SPECIFICATION
## published in accordance with Art. 158(3) EPC

(45) Date of publication of patent specification: **14.08.91**

(51) Int. Cl.⁵: **C04B 35/02**

(21) Application number: **83901533.6**

(22) Date of filing: **04.04.83**

(86) International application number:
**PCT/US83/00457**

(87) International publication number:
**WO 83/03823 (10.11.83 83/26)**

(54) **METHOD FOR FABRICATING CERAMIC MATERIALS.**

(30) Priority: **03.05.82 US 374311**

(43) Date of publication of application:
**09.05.84 Bulletin 84/19**

(45) Publication of the grant of the patent:
**14.08.91 Bulletin 91/33**

(84) Designated Contracting States:
**DE FR NL**

(56) References cited:
**EP-A- 0 065 863**
**US-A- 4 065 544**

**CHEMICAL ABSTRACTS, vol. 99, no. 24, 12th
December 1983, page 272, abstract no.
199479k, Columbus, Ohio, US; M.F. YAN et
al.: "Low temperature sintering of titania", &
MATER. SCI. ENG. 1983, 61(1), 59-66**

(73) Proprietor: **Western Electric Company, Incorporated
222 Broadway
New York, NY 10038(US)**

(72) Inventor: **YAN, Man Fei
51 Park Avenue
Berkeley Heights, NJ 07922(US)**

(74) Representative: **Blumbach Weser Bergen
Kramer Zwirner Hoffmann Patentanwälte
Radeckestrasse 43
W-8000 München 60(DE)**

JOURNAL OF THE AMERICAN CERAMIC SO-
CIETY, vol. 55, no. 11, November 1972, pages
541-544, Columbus, Ohio, US; L.M. BROWN et
al.: "Cold-pressing and low-temperature sin-
tering of alkoxy-derived PLZT"

CHEMICAL ABSTRACTS, vol. 70, no. 26, 30th
June 1969, page 272, abstract no. 118466e,
Columbus, Ohio, US; A.V. SAMOKHIN et al.:
"Effect of the dispersion-medium pH on the
aggregate stability of aqueous suspensions
of titanium dioxide", & TR. MOSK.
KHIM.-TEKHNOL. INST. 1968, No. 58, 219-21

CHEMICAL ABSTRACTS, vol. 85, no. 2, 12th
July 1976, page 497, abstract no. 12618a,
Columbus, Ohio, US; M. TAKATA et al.:
"Doping effects of aluminum oxide or
niobium(V) oxide on the electrical conductivity of titanium(IV) oxide sintered bodies",
& YOGYO KYOKAI SHI 1976, 84(5), 237-41

Perry's Chemical Engineers' Handbook, 6th
edition, 1984, pages 8-13 and 8-14

## Description

This invention relates to a method of fabricating bodies of ceramic material selected from materials comprising $Al_2O_3$, $ZrO_2$ and $TiO_2$, which comprises preparing metal oxide(s) powder by hydrolysis technique including hydrolyzing suitable metal alkoxide(s), washing, drying, granulating and calcining, wet ball milling the calcined metal oxide(s) powder, compacting the ball-milled powder into at least one powder compact, and low-temperature sintering the said at least one powder compact into a ceramic body.

Devices fabricated from ceramic materials have many important technological applications. For example, they are useful as magnets, capacitors, thyristors, thermistors, as well as in many other applications. Many techniques have been developed for fabrication of these materials and most, if not all, require a high temperature sintering step.

Many types of devices using ceramic materials are electrical devices which require one or more electrical contacts. However, the high sintering temperature, typically 1400°C, greatly restricts the materials that may be used to form the electrodes. As many of the electrode materials are precious metals and since the price of these metals has greatly increased in recent years, methods of ceramic fabrication which permit use of lower sintering temperatures and, thus cheaper electrode materials, would be desirable. Of course, low sintering temperatures are also desirable in the fabrication of other types of devices because, for example, the lower energy costs of and easier compositional control when volatile components are present permitted by the low sintering temperature are desirable.

Multilayer ceramic capacitors are an example of an electrical device for which a lower sintering temperature would be desirable. Processing of multilayer ceramic capacitors typically requires placing an electrode material between layers of ceramic material. Both the ceramic layers and layers of electrode material are cosintered at an elevated temperature in an oxidizing atmosphere. Barium titanate ceramic powders, which are commonly used in multilayer ceramic capacitors, typically require a sintering temperature of approximately 1400°C. At such a relatively high temperature, precious metals such as Ag-Pd alloys, are typically required for the electrode materials. Alternatives, such as an electrode consisting of Ag, cannot be used unless the ceramic material can be sintered at temperatures below the melting point, approximately 962°C, of Ag.

Various approaches have been taken in efforts to lower the sintering temperatures. One approach decreases the sintering temperatures by chemical means by, for example, adding dopants to the ceramic compositions prior to sintering. However, this approach is often undesirable as the dopants may produce deleterious effects on the dielectric properties of the ceramic composition. A second approach prepares the ceramic powder with optimal physical characteristics so that sintering can proceed at low temperatures. One example of this approach was reported in Journal of the American Ceramic Society, 64, pp. 19-22, 1981. This paper reported using de-agglomerated submicron powders of $Y_2O_3$ stabilized $ZrO_2$ which could be sintered at 1100°C. This temperature is approximately 300°C lower than the normal sintering temperature.

Further examples of prior art references are the followings:

Journal of The American Ceramic Society, November 1972, pages 541 to 544, discloses a method substantially along the lines as defined at the begin of the description.

US-A-40 65 544 discloses finely-divided metal oxides which are prepared by the steps of (a) contacting a compound of a metal with a carbohydrate material to obtain an intimate mixture thereof, (b) igniting this mixture to oxidize the same and to ensure conversion of substantially all of said metal compound to a fragile agglomerate of its metal oxide, and (c) pulverizing the product of step (b) to form a finely-divided metal oxide powder having a mean particle size below about 1.0 micrometer. Certain of the finely-divided metal oxide powders produced by this process have the useful property of sinterability at temperatures significantly lower than metal oxide powders heretofore readily available. The powders are useful in the preparation of high strength compacted shapes for use in high temperature and/or corrosive environment, in the preparation of refractory cements, catalysts, catalysts supports and the like.

Chemical Abstracts, Vol. 85, 1976, page 497, Abstract No. 12 618a, discloses doping effects of aluminum oxide or niobium (V) oxide on the electrical conductivity of titanium (IV) oxide sintered bodies.

Journal of the American Ceramic Society, January 1981, page 19 to 22, describes agglomerate and particle size effects on yttria-stabilized zirconia.

## Summary of the invention:

The invention comprises a method of fabricating bodies of ceramic materials as initially defined, and is characterized by conducting the said wet ball milling with an aqueous slurry within a determined pH range selected to maximize the powder dispersion during the said ball milling.

On this way it is possible to produce ceramic materials sintered to high densities at relatively low temperatures.

In a preferred embodiment the ceramic material prepared by the method comprises $TiO_2$ and the milling is conducted with an aqueous solution having pH ranging from 1.8 to 2.4, preferably approximately 2.1, with the $TiO_2$ being prepared by hydrolysis of a Ti-alkoxide with 2 to 4 carbon atoms, for example isopropoxide, which is sintered to 99 percent of its theoretical density at 850°C. This temperature is approximately 500°C below the normal sintering temperature.

Detailed Description

The concerned ceramic oxide materials may be sintered at relatively low temperature by using nonagglomerated ceramic powder having a very small particle size. The metal oxide powder is ball milled in a slurry having a pH value within a range that maximizes powder dispersion in the slurry. The pH controls the surface charge on the particle and helps reduce the tendency toward agglomeration. The small size of the particles is desirable as it leads to small voids in compacted material that are easier to remove during the sintering process and thus leads to higher densities. However, small particle size alone is not sufficient as the particles must also be dispersed in the slurry to prevent agglomeration which again may lead to large voids and result in lower densities after sintering.

The powder is prepared by a process that begins with the hydrolysis of an alkoxide. If the viscosity of the alkoxide is undesirably high at the desired processing temperature, it may be reduced by dissolving the alkoxide in an appropriate alcohol. The addition of the alcohol should also result in smaller particle sizes. If several metals are desirably present in the ceramic material, more than one alkoxide will be used. The use of an alkoxide affords a convenient way of introducing the desired metal atom while yielding reaction products, a metal oxide and an alcohol, after hydrolysis that do not react with each other.

After hydrolysis, the metal oxide powder will generally undergo intermediate processing steps before ball milling. The appropriate intermediate steps will typically include drying the powder in the slurry produced during hydrolysis and then granulating and calcining the powder. After ball milling has been completed, the slurry may be allowed to stand for a period of time to permit the larger particles to settle. After settling for a period of time, the supernatant slurry may be drawn off and the particles compacted. This process selects the smaller particle and increases attainable densities.

The degree of powder dispersion which should be maximized during ball milling depends upon the pH of the solution. The slurry viscosity and sedimentation studies may be used to determine the amount of powder dispersion and thus, the critical pH values and ranges, in the slurry. In general, a slurry having a more dispersed powder has a relatively lower viscosity than does one having a less dispersed powder. There are reports in the literature, see, for example, Journal of the American Ceramic Society, 12, pp. 394-398, 1949, showing the relationship between the apparent viscosity of the slurry and its pH. It was hypothesized that oxide surfaces generally contain ionizing sites from which $H^+$ or $OH^-$ may be released resulting in a net surface charge and a potential difference between the oxide surface and the liquid medium far from the oxide surface. This potential difference is commonly referred to as the zeta potential and analyses have shown that it reaches maximum values at critical pH values or ranges. These values or ranges are determined by the fact that the ionization of the oxide surface depends on the pH of the liquid medium at which the oxide is at equilibrium. Since every particle carries the same charge and has the same zeta potential, the electrostatic repulsion between particles can prevent the close approach, that is, flocculation, of the particles. If the zeta potential is sufficiently large, the electrostatic repulsion becomes significant and overcomes the van der Waal attractive force and the particles remain dispersed in the liquid. The relatively low viscosity is desirable because it results in a slurry having well dispersed particles.

The sedimentation velocity of solid particles may be calculated from Stoke's equation which shows that the velocity increases with the square of the particle size. Thus, in slurries having fine particles, sedimentation typically proceeds slowly. As an example, $TiO_2$ powder prepared as described below, has a particle radius of approximately 0.02 $\mu$m and, when well dispersed, has a sedimentation velocity less than 0.1 mm/day.

However, fine particles tend to form agglomerates and each agglomerate may consist of $10^3$-$10^5$ loosely bound particles with a rather low solid content. Since the agglomerate size is much larger than the particle size, the sedimentation velocity of the agglomerates may be much larger than that expected for the individual particles. When the agglomerates consist primarily of particles of approximately the same size, their sedimentation velocities are inversely proportional to the solid fractions in the agglomerates. Thus, the sedimentation velocity can be relatively rapid even when the fine particles form a bulky and low density agglomerate. Consequently, the degree of powder dispersion can be directly related to the sedimentation velocity.

The method appears well adapted for use with $Al_2O_3$, $ZrO_2$, and $TiO_2$ and will be illustrated by

specific reference to $TiO_2$. Submicron $TiO_2$ powder is prepared by hydrolysis of titanium alkoxides, e.g., titanium ethoxide, titanium isopropoxide and titanium butoxide. The hydrolysis reaction is represented by the following chemical reactions:

$$2Ti(OC_nH_{2n+1})_4 + 2H_2O \rightarrow 2TiO(OC_nH_{2n+1})_2 + 4C_nH_{2n+1}OH \quad (1)$$

$$2TiO(OC_nH_{2n+1})_2 \rightarrow TiO_2 + Ti(OC_nH_{2n+1})_4. \quad (2)$$

The net reaction is:

$$Ti(OC_nH_{2n+1})_4 + 2H_2O \rightarrow TiO_2 + 4C_nH_{2n+1}OH \quad (3)$$

where n = 2, 3 and 4, for titanium ethoxide, titanium isopropoxide and titanium butoxide, respectively. Thus, each mole of titanium alkoxide reacts with 2 moles of water to yield 1 mole of $TiO_2$ and 4 moles of alcohol.

Certain cation dopants, e.g., Al, Nb and Ta, are often desirably added to $TiO_2$ to control certain electrical characteristics. The dopants can be introduced in the form of a metal alkoxide which is dissolved in the titanium alkoxide. For example, when Al is the desired dopant, an appropriate amount of, for example, aluminum butoxide is dissolved in titanium butoxide. When Ta or Nb is the desired dopant, an appropriate amount of, for example, tantalum ethoxide or niobium ethoxide is dissolved in titanium ethoxide. Since the precursors of the cation dopants and $TiO_2$ are both in a miscible solution, a homogeneous distribution of the dopants in $TiO_2$ is achieved.

The melting points of the titanium alkoxides are close to typical processing temperatures, for example, 25°C, and the liquid alkoxides are very viscous at these temperatures. The viscosity of the alkoxide may be reduced by dissolving the alkoxide in an appropriate alcohol, for example, titanium ethoxide in ethyl alcohol, titanium isopropoxide in isopropyl alcohol and titanium butoxide in butyl alcohol.

The alcohol content of the diluted alkoxide solution is desirably less than 95 percent. The diluted solution also yields a smaller particle size of the $TiO_2$ hydrolysis reaction production. For example, the size of the $TiO_2$ particles prepared with an alkoxide solution comprising 10 percent titanium isopropoxide and 90 percent isopropyl alcohol is approximately 25 percent of that of particles prepared with undiluted titanium isopropoxide. It is hypothesized that the particle size is reduced by the alcohol dilution because the particle size is determined by the frequency of the Brownian collisions between $TiO_2$ molecules. In a diluted condition, the $TiO_2$ molecules are less concentrated and their collision frequency is reduced.

The processing may proceed as follows. The reactions desirably occur at a temperature, such as 25°C, at which the titanium alkoxide, for example, isopropoxide, remains a liquid. As titanium isopropoxide solution contacts water, it reacts rapidly to form cloudy precipitates. The titanium isopropoxide may, for example, be sprayed into stirring water. An inert gas, such as nitrogen, is desirably above the moving water to minimize $CO_2$ contamination.

The liquid is removed from the slurry by filtering through appropriate filter paper having a small diameter, typically less than 2-3 $\mu$m, openings. The resulting filtrate appears as a clear liquid which indicates that the agglomerate sizes of the precipitates formed during hydrolysis are larger than the openings in the filter paper. The residue is removed and mixed thoroughly with distilled water, preferably triply distilled, to remove any unreacted titanium isopropoxide. The slurry is then filtered to remove the liquid. The residue is then mixed with isopropyl alcohol and again filtered. The process of mixing and washing with alcohol followed by filtration is desirably repeated several times, for example, three, to remove residual water.

The filtered powder is then dried at approximately 100°C for approximately 1 hour. The dried powder is granulated through a screen having, for example, 850 $\mu$m diameter openings, and calcined at a temperature of approximately 550°C in air for 16 hours. The calcined powder is then milled for approximately 3 hours in a $HCl$-$H_2O$ solution having a pH of approximately 2.1 using $ZrO_2$ milling media in a polypropylene container. The slurry has a solid content of approximately 14 percent by weight.

A pH of 2.1 appears most desirable as it appears that this maximizes the $TiO_2$ powder dispersion in aqueous solutions. Any pH within the range from approximately 1.8 to approximately 2.4 may be advantageously used. Agglomerates are likely to form outside this range.

After ball milling, the powder slurry was allowed to stand for 72 hours. The supernatant slurry, which consisted of only the finest particles in suspension, was removed by siphoning and concentrated into compacts by, for example, centrifuging. The resulting powder compact was dried at approximately 105°C for approximately 16 hours. The resulting compacts are then sintered at temperatures between 650°C and 1200°C. Flowing oxygen may be used as the sintering atmosphere.

The densities of the resulting materials were measured by the Archimedes method with $CCl_4$ being the submersion liquid. The relative densities determined were based on the theoretical density of 4.26 $g/cm^3$. Both doped and undoped $TiO_2$ prepared by the described method and sintered at 850°C for 2 hours in oxygen had densities greater than 99.5 percent of the theoretical value and a grain size less than 0.5 $\mu$m.

It is generally accepted by those working in the art that there are relatively simple laws which govern the times required to produce, by sintering at a given temperature, geometrically similar results in systems of solid particles that are identical except for differences in particle dimensions. As an example, if a time, $t_1$, is required to sinter spherical particles with a radius, $r_1$, at a given temperature, then the time, $t_2$, required to sinter particles having a radius, $r_2$, is given by the equation:

$$t_2 = \left(\frac{r_2}{r_1}\right)^n t_1$$

where the value of n depends on the mass transport mechanism for sintering. The value of n is 3 for lattice diffusion and 4 for grain boundary diffusion. It is generally further assumed by those working in the art that the required sintering time increases exponentially with the reciprocal temperature. At low temperatures and with samples having small grain sizes, grain boundary diffusion is generally the more important mass transport mechanism leading to densification. Grain boundary diffusion in $TiO_2$ has not been reported in the literature but the activation energy of grain boundary diffusion is generally smaller than that of lattice diffusion. Thus it could be expected that the small particle size leads to a decrease in the sintering temperature.

It is important that, prior to low temperature sintering, $TiO_2$ powder be well dispersed prior to compaction. In the method described, large agglomerates formed during hydrolysis and calcination were removed by sedimentation. Thus, only the fine and unagglomerated particles were concentrated into the dense compact by centrifuge. The removal of agglomerates led to a more uniform distribution of density in the specimens prepared. Pore size distribution is more uniform and densification can proceed more readily without being rate limited by the residual pores as it is when the samples have a nonuniform density.

The powder compacts may be prepared by methods other than centrifuge techniques. For example, isostatic pressing can result in compacts having the desired uniform density distribution.

After sintering has been completed, device fabrication may proceed with, for example, the fabrication of electrical contacts to the ceramic material.

## Claims

1. A method of fabricating bodies of ceramic material selected from materials comprising $Al_2O_3$, $ZrO_2$ and $TiO_2$, which comprises

   preparing metal oxide(s) powder by hydrolysis technique including hydrolyzing suitable metal alkoxide(s), washing, drying, granulating and calcining,

   wet ball milling the calcined metal oxide(s) powder,

   compacting the ball-milled powder into at least one powder compact, and

   low-temperature sintering the said at least one powder compact into a ceramic body,

   CHARACTERIZED BY

   conducting the said wet ball milling with an aqueous slurry within a determined pH range selected to maximize the powder dispersion during the said ball milling.

2. A method according to claim 1
   CHARACTERIZED IN THAT
   said ceramic material comprises $TiO_2$, and said milling is conducted with an aqueous solution having pH ranging from 1.8 to 2.4.

3. A method according to claim 2,
   CHARACTERIZED IN THAT
   said pH is preferably approximately 2.1.

4. A method according to claim 2 or 3,
   CHARACTERIZED BY
   conducting said sintering between 650° C and 1200° C, preferably at 850° C.

5. A method according to claim 2 or 3 or 4,
   CHARACTERIZED IN THAT
   said ceramic material further comprises cation dopants selected from Al, Nb and Ta.

6. A method according to claim 2 or 3 or 4 or 5,
   CHARACTERIZED BY
   selecting said at least one alkoxide from titanium ethoxide, titanium isopropoxide and titanium butoxide.

7. A method according to, any one of preceding claims 1-6
   CHARACTERIZED BY
   adding an alcohol to said alkoxide.

8. A method according to any one of preceding claims 1-7,
   CHARACTERIZED IN THAT
   said compacting includes drawing-off a supernatant liquid resulting from wet ball milling,
   forming powder from the supernatant liquid into at least one powder compact, and
drying said powder compact.

## Revendications

1. Un procédé de fabrication de blocs d'un matériau céramique sélectionné parmi des matériaux comprenant $Al_2O_3$, $ZrO_2$ et $TiO_2$, dans lequel :

   on prépare une poudre d'un ou de plusieurs oxydes métalliques par une technique d'hydrolyse, comprenant l'hydrolyse d'un ou de plusieurs alkoxydes de métal appropriés, le lavage, le séchage, la granulation et la calcination,

   on broie dans un broyeur à billes, à l'état humide, la poudre calcinée du ou des oxydes métalliques,

   on compacte la poudre broyée dans le broyeur à billes, pour donner au moins une masse compacte de poudre, et

   on fritte à basse température la masse compacte de poudre, pour donner un bloc de céramique,

   CARACTERISE EN CE QUE

   on accomplit le broyage dans un broyeur à billes à l'état humide avec une dispersion aqueuse dans une plage de pH déterminée qui est sélectionnée de façon à maximiser la dispersion de la poudre pendant le broyage dans le broyeur à billes.

2. Un procédé selon la revendication 1
   CARACTERISE EN CE QUE
   le matériau céramique consiste en $TiO_2$, et le broyage est effectué avec une solution aqueuse ayant un pH compris dans une plage allant de 1,8 à 2,4.

3. Un procédé selon la revendication 2,
   CARACTERISE EN CE QUE
   le pH est de préférence d'environ 2,1.

4. Un procédé selon la revendication 2 ou 3,
   CARACTERISE EN CE QUE
   on effectue le frittage entre 650°C et 1200°C, de préférence à 850°C.

5. Un procédé selon la revendication 2 ou 3 ou 4,
   CARACTERISE EN CE QUE
   le matériau céramique comprend en outre des dopants consistant en cations qui sont sélectionnés parmi Al, Nb et Ta.

6. Un procédé selon la revendication 2 ou 3 ou 4 ou 5,
   CARACTERISE EN CE QUE
   on sélectionne le ou les alkoxydes parmi l'éthoxyde de titane, l'isopropoxyde de titane et le butoxyde de titane.

7. Un procédé selon l'une quelconque des revendications 1-6 précédentes,
   CARACTERISE EN CE QUE
   on ajoute un alcool à l'alkoxyde.

8. Un procédé selon l'une quelconque des revendications 1-7 précédentes,
   CARACTERISE EN CE QUE
   l'opération consistant à compacter la poudre comprend les opérations qui consistent à retirer un liquide qui surnage et qui résulte du broyage dans le broyeur à billes à l'état humide, à former au moins une masse compacte de poudre à partir de la poudre extraite du liquide qui surnage, et
   à sécher la masse compacte de poudre.

## Patentansprüche

1. Verfahren zum Herstellen von Körpern aus einem Keramikmaterial, das aus $Al_2O_3$, $ZrO_2$ und $TiO_2$ umfassenden Materialien ausgewählt ist, wobei das Verfahren umfaßt

   - Präparieren eines Pulvers aus einem oder mehreren Metalloxiden im Hydrolyseverfahren, bei dem ein geeignetes Metall-Alkoxid oder geeignete Metall-Alkoxide hydrolisiert, gewaschen, getrocknet, granuliert und calciniert werden,
   - Naß-Kugelvermahlen des calcinierten Pulvers aus dem Metalloxid oder den Metalloxiden,
   - Verdichten des kugelvermahlenen Pulvers in wenigstens einen verdichteten Pulverkörper und
   - Sintern des verdichteten Pulverkörpers in einen Keramikkörper bei niedriger Temperatur,

   gekennzeichnet durch
   Ausführen des Naß-Kugelvermahlens mit einer wässrigen Schlemme innerhalb eines vorbestimmten pH-Bereichs, der zur Maximierung der Pulverdispersion während des Kugelvermahlens gewählt wird.

2. Verfahren nach Anspruch 1,
   dadurch gekennzeichnet, daß

   - das Keramikmaterial $TiO_2$ umfaßt und das Vermahlen mit einer wässrigen Lösung eines pH-Wertes von 1,8 bis 2,4 durchgeführt wird.

3. Verfahren nach Anspruch 2,
   dadurch gekennzeichnet, daß

   - der pH-Wert vorzugsweise annähernd 2,1 ist.

4. Verfahren nach Anspruch 2 oder 3,
   gekennzeichnet durch
   - Durchführen der Sinterung zwischen 650 und 1200 °C, vorzugsweise bei 850 °C.

5. Verfahren nach Anspruch 2 oder 3 oder 4,
   dadurch gekennzeichnet, daß
   - das Keramikmaterial des weiteren Kationendotierstoffe umfaßt, die aus Al, Nb und Ta ausgewählt werden.

6. Verfahren nach Anspruch 2 oder 3 oder 4 oder 5,
   gekennzeichnet durch
   - Auswählen des Alkoxides oder der Alkoxide aus Titanethoxid, Titanisopropoxid und Titanbutoxid.

7. Verfahren nach einem der vorstehenden Ansprüche 1 bis 6,
   gekennzeichnet durch
   - Zufügen eines Alkohols zu dem Alkoxid.

8. Verfahren nach einem der vorstehenden Ansprüche 1 bis 7,
   dadurch gekennzeichnet, daß
   - das Verdichten ein Abziehen von überschüssiger Flüssigkeit, die von dem Naß-Kugelvermahlen herrührt, einschließt,
   - Pulver aus der überschüssigen Flüssigkeit in wenigstens einen Pulverkörper verdichtet wird, und
   - der verdichtete Pulverkörper getrocknet wird.